**Europäisches Patentamt**

**European Patent Office**

**Office européen des brevets**

(19)

(11) Veröffentlichungsnummer: **0 172 982**
A2

(12) # EUROPÄISCHE PATENTANMELDUNG

(21) Anmeldenummer: 85101338.3

(22) Anmeldetag: 08.02.85

(51) Int. Cl.⁴: **H 01 S 3/03,** H 01 S 3/097

(30) Priorität: 31.08.84 DE 3432010

(71) Anmelder: **W.C. Heraeus GmbH, Heraeusstrasse 12 - 14, D-6450 Hanau / Main (DE)**

(43) Veröffentlichungstag der Anmeldung: 05.03.86 Patentblatt 86/10

(72) Erfinder: **Opower, Hans, Dr., Sperberweg 13, D-8033 Krailling (DE)**

(74) Vertreter: **Heinen, Gerhard, Dr., Heraeusstrasse 12-14, D-6450 Hanau/Main (DE)**

(84) Benannte Vertragsstaaten: **AT CH DE FR GB LI**

(54) **Gaslaser, insbesondere CO2-Laser.**

(57) Es sind Gaslaser, insbesondere $CO_2$-Laser, bekannt mit einem Entladungsraum, der von einem laseraktiven Gas mit hoher Geschwindigkeit durchströmt wird, wobei die zur Anregung dienende Gasentladung als Gleichfeldentladung zwischen einer in Strömungsrichtung (5) ausgedehnten Anode (4) und einer der Anode gegenüberliegenden (Haupt-) Kathode (3') brennt. Um einen Gaslaser zu schaffen, dessen Wirkungsgrad wesentlich durch weitgehende Unterdrückung der üblicherweise auftretenden Instabilitäten erhöht wird, wird der Kathode (3') unmittelbar benachbart auf der zur Anode (4) weisenden Seite (6) mindestens ein erster flügelartiger Anströmkörper oder Vorflügel (11) angeordnet, dessen Längserstreckung quer zur Strömungsrichtung (5) im wesentlichen der Länge der Kathode (3) entspricht.

EP 0 172 982 A2

0172982

Hanau, den 29. Aug. 1984
ZPL-cG/Rü

W. C. Heraeus GmbH, Hanau

"Gaslaser, insbesondere $CO_2$-Laser"

Die vorliegende Erfindung betrifft einen Gaslaser, insbesondere
einen $CO_2$-Laser, gemäß dem Oberbegriff des Anspruchs 1. Derartige Gaslaser sind allgemein bekannt.

Insbesondere für $CO_2$-Hochleistungslaser wird vorzugsweise
eine Anordnung gewählt, bei der das laseraktive Gas transversal
über eine kurze Wegstrecke durch einen Anregungsraum getrieben
wird, in dem zwischen zwei Elektroden eine Gasentladung brennt.
Das elektrische Feld der Gasentladung und die Strömungsrichtung
des Gases stehen aufeinander senkrecht. Die optische Achse
des Laserresonators erstreckt sich hierbei in einem rechten
Winkel zum elektrischen Feld und zur Gasströmung.

Diese Anordnung hat den Vorteil, daß das aktive Gas jeweils
nur eine sehr geringe Verweilzeit im Bereich der Gasentladung
besitzt und deshalb eine hohe elektrische Leistung aufnehmen
kann, ohne daß dabei die Temperatur die noch zulässigen Werte
überschreitet. Zur Aufrechterhaltung der Entladung wird ein
elektrisches Gleichfeld mit einer nur mäßig hohen Versorgungsspannung (ca. 2000 V) benötigt.

— 2 —

In den praktischen Ausführungen hat sich gezeigt, daß die theoretisch mögliche Energiebeaufschlagung, insbesondere bei höheren Gasdichten, meist nicht erreicht wird. Dies ist die Folge von auftretenden Instabilitäten, die durch die Bildung negativer Ionen zum Verlust von Elektronen und auch zur Entstehung von Bogenentladungen führen. Um diese schädlichen Instabilitäten zu unterdrücken, wird versucht, das Lasergas rein von Verunreinigungen zu halten. Darüber hinaus werden vielfach elektrische Maßnahmen ergriffen, die die verstärkte Erzeugung von Elektronen zum Ziele haben. Hierzu zählen spezielle elektrische Beschaltungen der Kathode oder zusätzliche Hilfsentladungen auf der Grundlage von Funken- oder Koronaentladungen. Diese bekannten Hilfsentladungen haben den Nachteil, daß sie Hochspannungsschaltkreise mit Kilowatt-Leistungen erforderlich machen und darüber hinaus Bauteile benötigen, die einem starken Verschleiß unterworfen sind.

Der vorliegenden Erfindung liegt nun die Aufgabe zugrunde, einen Gaslaser, insbesondere $CO_2$-Laser, zu schaffen, dessen Wirkungsgrad wesentlich durch weitgehendste Unterdrückung der üblicherweise auftretenden Instabilitäten erhöht wird.

Diese Aufgabe wird erfindungsgemäß durch die kennzeichnenden Merkmale des Anspruchs 1 gelöst. Gemäß der vorliegenden Erfindung werden zur Unterdrückung der Instabilitäten völlig andere Wege eingeschlagen als bisher, wobei folgende Gesichtspunkte maßgebend sind:

Es hat sich herausgestellt, daß die Instabilität ihren Ursprung vorwiegend im kathodennahen Bereich der Gasentladung haben. Durch den erfindungsgemäßen - mindestens einen - Anströmkörper oder Vorflügel, der der Kathode unmittelbar benachbart auf der zur Anode weisenden Seite angeordnet ist, wird eine wirbelfreie Durchströmung des Entladungsraumes und insbesondere

eine wirbelfreie Umströmung der Kathode erreicht. Eine Ablösung
der Strömungsgrenzschicht an der Kathodenoberfläche und eine
damit verbundene Wirbelbildung tritt nicht auf. Damit eine
Ablösung der Gasströmung entlang der gesamten, meist langgestreckten Kathode vermieden wird, muß der Vorflügel eine
der Kathode entsprechende Länge aufweisen.

Als vorteilhaft hat sich ein Abstand zwischen Kathode und
dem ersten Vorflügel von etwa 5 mm erwiesen, und zwar bei
einem Druck von 40 bis 50 mbar.

Besonders bewährt haben sich zwei verschieden profilierte
Vorflügel: Einmal ein Vorflügel mit einem tropfenförmigen
Profil, zum anderen ein Vorflügel in Form einer ebenen Platte,
wobei in strömungsgünstiger Anordnung der erste Vorflügel
die Kathode anströmseitig teilweise überlappt.

Je nach Größe und Form der Kathode und entsprechend des ersten
Vorflügels ist es von Vorteil, dem ersten Vorflügel einen
oder mehrere weitere Vorflügel zuzuordnen, die einen abnehmenden
Querschnitt mit jeweils tropfenförmigem Profil haben sollten.
In vorteilhafter Ausgestaltung ist hierbei der letzte der
sich überlappenden Vorflügel eine ebene Platte. Ein geeignetes
Höhen-Breiten-Verhältnis der Vorflügel liegt bei 4 : 1, wobei
für die Breite die breiteste Stelle des Vorflügels, bei einem
tropfenförmig profilierten Vorflügel die verdickte Anströmseite,
zu nehmen ist.

Der oder die Vorflügel sollten aus dielektrischem Material
bestehen. Unter Umständen kann es jedoch von Vorteil sein,
wenn mindestens der erste Vorflügel auf Kathodenpotential
liegt und so eine Hilfskathode bildet, und zwar gerade dann,
wenn die Hauptkathode und die Anode weit voneinander beabstandet
sind.

Zur Kühlung der Hauptkathode und der auf Kathodenpotential
liegenden Vorflügel sind diese als Hohlkörper ausgebildet
und werden mit einem Kühlmedium durchströmt.

Gut bewährt hat sich bei einer tropfenförmig profilierten
Hauptkathode ein erster Vorflügel, der zur Hauptkathode hin
gekrümmt verläuft, dessen Außenkontur der Außenkontur der
Hauptkathode weitgehendst angepaßt ist.

Weitere Vorteile und Merkmale der Erfindung ergeben sich
aus der nachfolgenden Beschreibung eines Ausführungsbeispiels
anhand der Zeichnung. In der Zeichnung zeigt

Figur 1 eine erfindungsgemäße Laseranordnung im Bereich der
        Elektroden mit einem Vorflügel,

Figur 2 einen Schnitt entlang der Schnittlinie II - II in
        Figur 1,

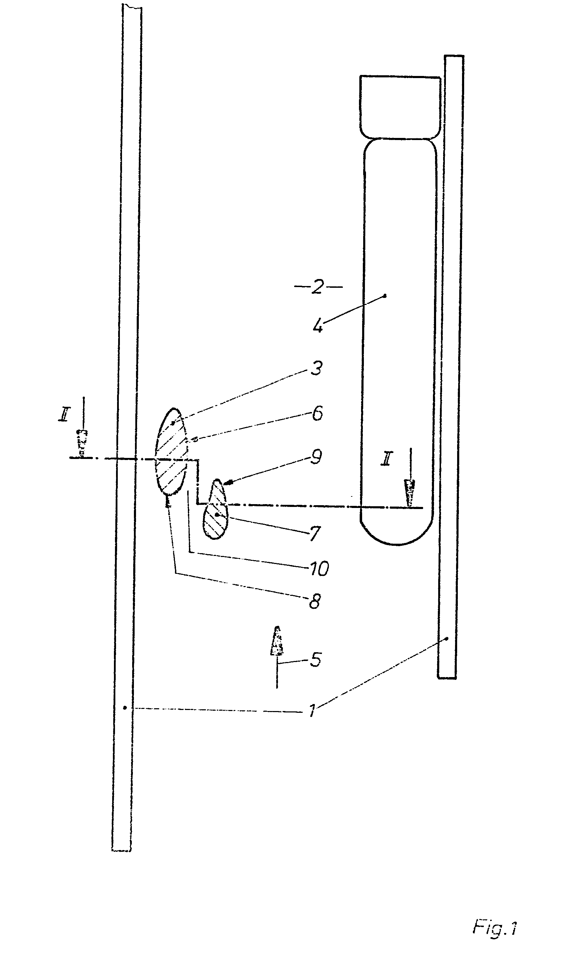

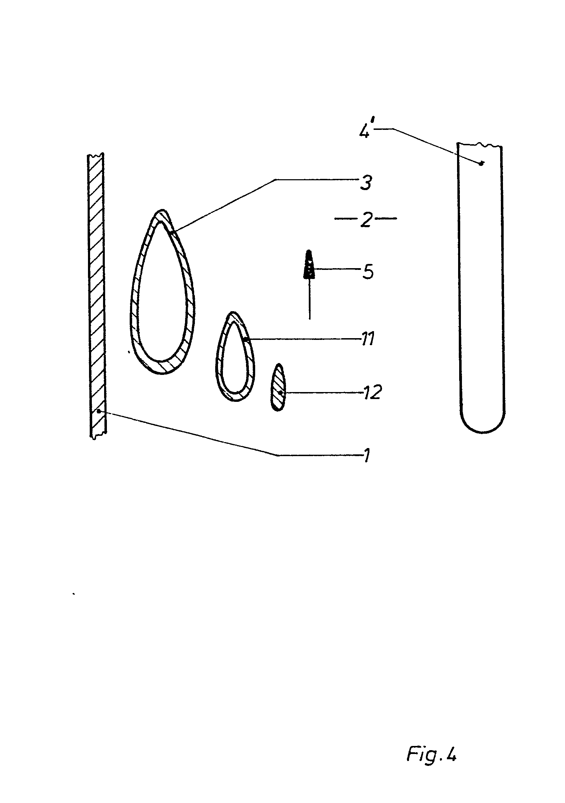

Figur 3 eine gegenüber der Fig. 1 abgewandelte Kathodenkonfiguration und

Figur 4 eine Kathodenanordnung mit mehreren Vorflügeln.

Die in Fig. 1 ausschnittsweise dargestellte Laseranordnung
weist einen durch seitliche Wände 1 begrenzten Anregungsraum
2 auf; die Gasentladung brennt zwischen einer Kathode 3 und
einer Anode 4. Die Anode 4 hat hierbei eine Erstreckung in
Strömungsrichtung des Lasergases, durch den Pfeil 5 angedeutet,
von annähernd 10 cm. Bei dieser Anordnung stehen das elektrische
Feld der Gasentladung und die Strömungsrichtung 5 aufeinander
senkrecht, wobei sich die optische Achse des Laserresonators
in einem rechten Winkel zum elektrischen Feld und zur Gasströmung erstreckt.

- 5 -

In unmittelbarer Nachbarschaft zur Kathode 3 befindet sich auf deren zur Anode 4 hin gerichteten Seite 6 ein Anströmkörper oder Vorflügel 7, der ein tropfenförmiges Profil aufweist. Im Gegensatz zu dem tropfenförmigen Profil des Vorflügels 7 zeigt in diesem Ausführungsbeispiel die Kathode 3 ein ovales Profil. Der tropfenförmige Vorflügel 7, der die Kathode 3 auf deren Anströmseite 8 überlappt, ist mit seiner spitz auslaufenden Kante 9 in Strömungsrichtung 5 ausgerichtet. Im Bereich der Überlappung zwischen Kathode 3 und Vorflügel 7 wird ein etwa 5 mm breiter Strömungskanal 10 gebildet, in dem die Gasströmung beschleunigt wird. Durch die so bewirkte hohe Gas-Strömungsgeschwindigkeit entlang der Außen-Seite 6 der Kathode 3 wird eine zu frühe Ablösung der Strömungsgrenzschicht an der Kathodenoberfläche und die damit verbundene Wirbelbildung verhindert. Eine normalerweise im Wirbelbereich von Kathoden ohne Vorflügel vorhandene hohe Verweilzeit von Gaspartikeln, die zu Instabilitäten führt, tritt demzufolge nicht auf.

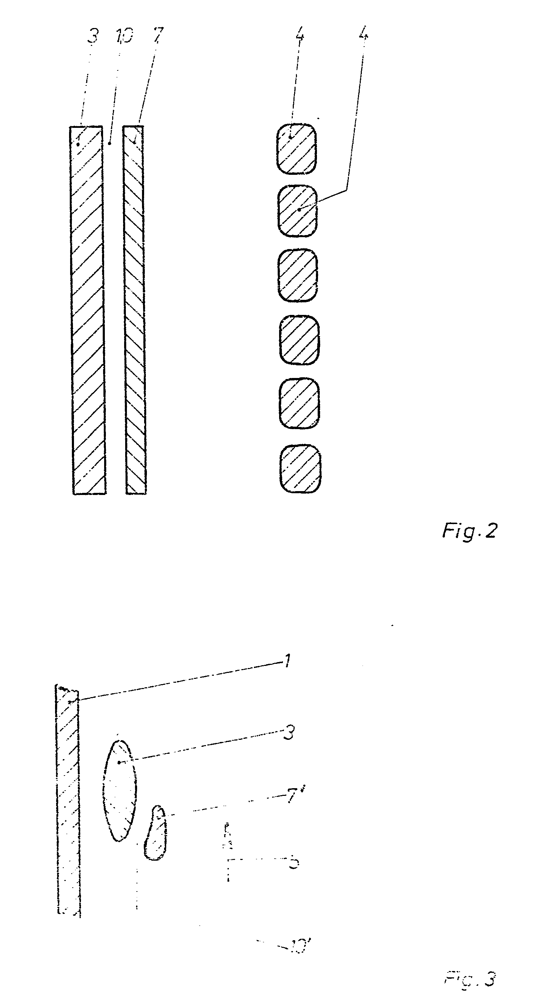

Die in Figur 3 gezeigte Kathodenkonfiguration ist gegenüber dem Ausführungsbeispiel nach Figur 1 und Figur 2 dahingehend abgewandelt, daß der Vorflügel, in diesem Fall mit dem Bezugszeichen 7' bezeichnet, geringfügig zur Kathode 3 mit ovalem Querschnitt hin gekrümmt verläuft, so daß ein langgestreckter Strömungskanal 10' entsteht, dessen Breite sich in Strömungsrichtung 5 geringfügig verringert. Auch hier wird durch den Vorflügel 7' die Strömungsablösung von der Kathode 3 an deren hinteres Ende verlegt.

Gemäß der Ausführungsform nach Figur 4 weist die mit 3' bezeichnete Kathode ein tropfenförmiges Profil auf. Auf der zur Anode 4 hinweisenden Seite der Kathode 3' sind zwei einzelne Vorflügel bzw. Anströmkörper 11, 12 mit abnehmendem Querschnitt so angeordnet, daß jeweils der Vorflügel mit geringerem Querschnitt

0172982

den Vorflügel mit größerem Querschnitt anströmseitig überlappt.
Die einzelnen Vorflügel 11, 12 sind praktisch entgegen der
Strömungsrichtung 5 stufenartig gegeneinander versetzt. Diese
Vorflügel 11 und 12 dienen dazu, jeweils eine Strömungsablösung an dem vorhergehenden Vorflügel bzw. an der Kathode 3'
weitgehendst zu verhindern.

Üblicherweise bestehen die Vorflügel aus dielektrischem Material;
sie können allerdings auch neben der Hauptkathode 3' als
Hilfselektroden dienen. In Figur 4 liegt der Vorflügel 11
als Hilfskathode auf Kathodenpotential, während der Vorflügel 12
aus dielektrischem Material besteht. Die Hauptkathode 3'
und die Hilfskathode 11 sind als Hohlkörper ausgebildet und
werden zur Kühlung von einem Kühlmedium durchströmt. Je nach
Größe der Kathode 3 bzw. 3' kann der erste Vorflügel auch
eine ebene Platte sein mit dem zusätzlichen Vorflügel 12
in Fig. 4 entsprechenden Querschnittsproportionen.

Hanau, den 29. Aug. 1984
ZPL-eG/Rü

W. C. Heraeus GmbH, Hanau


"Gaslaser, insbesondere $CO_2$-Laser"


## Patentansprüche

1. Gaslaser, insbesondere $CO_2$-Laser, mit einem Entladungsraum, der von einem laseraktiven Gas mit hoher Geschwindigkeit durchströmt wird, wobei die zur Anregung dienende Gasentladung als Gleichfeldentladung zwischen einer in Strömungsrichtung ausgedehnten Anode und einer der Anode gegenüberliegenden (Haupt-)Kathode brennt, dadurch gekennzeichnet, daß der Kathode (3, 3') unmittelbar benachbart auf der zur Anode (4) weisenden Seite (6) mindestens ein erster flügelartiger Anströmkörper oder Vorflügel (7; 7'; 11) angeordnet ist, dessen Längserstreckung quer zur Strömungsrichtung (5) im wesentlichen der Länge der Kathode (3,3') entspricht.

2. Gaslaser nach Anspruch 1, dadurch gekennzeichnet, daß der Abstand zwischen der Kathode (3, 3') und dem ersten Vorflügel (7; 7'; 11) etwa 5 mm beträgt.

3. Gaslaser nach Anspruch 1 oder 2, dadurch gekennzeichnet, daß der erste Vorflügel (7; 7'; 11) ein tropfenartiges Profil aufweist.

0172982

4. Gaslaser nach Anspruch 1 oder 2, dadurch gekennzeichnet, daß der erste Vorflügel (7; 7'; 11) eine ebene Platte ist.

5. Gaslaser nach einem der Ansprüche 1 bis 4, dadurch gekennzeichnet, daß der erste Vorflügel (7; 7'; 11) mindestens teilweise die Kathode (3, 3') anströmseitig überlappend angeordnet ist.

6. Gaslaser nach einem der Ansprüche 1 bis 5, dadurch gekennzeichnet, daß unmittelbar benachbart des ersten Vorflügels (7; 7'; 11) auf der zur Anode (4) weisenden Seite (6) ein oder mehrere weitere(r) Vorflügel (11; 12) angeordnet sind.

7. Gaslaser nach Anspruch 6, dadurch gekennzeichnet, daß die weiteren Vorflügel (11; 12) ein tropfenartiges Profil aufweisen.

8. Gaslaser nach Anspruch 6, dadurch gekennzeichnet, daß der äußere zur Anode (4) weisende Vorflügel (12) eine ebene Platte ist.

9. Gaslaser nach einem der Ansprüche 6 bis 8, dadurch gekennzeichnet, daß die einzelnen Vorflügel (11; 12) anströmseitig überlappend angeordnet sind.

10. Gaslaser nach einem der Ansprüche 1 bis 9, dadurch gekennzeichnet, daß die Erstreckung der einzelnen Vorflügel (11; 12) in Strömungsrichtung (5) von der Kathode (3') zur Anode (4) hin abnimmt.

11. Gaslaser nach einem der Ansprüche 1 bis 10, dadurch gekennzeichnet, daß das Höhen-Breiten-Verhältnis des/der Vorflügel (7; 7'; 11; 12) etwa 4 : 1 beträgt.

12. Gaslaser nach einem der Ansprüche 1 bis 11, dadurch
gekennzeichnet, daß die (Haupt-)Kathode (3') ein tropfenförmiges Profil aufweist.

13. Gaslaser nach einem der Ansprüche 1 bis 12, dadurch
gekennzeichnet, daß der/die Vorflügel (7; 7'; 11; 12)
aus dielektrischem Material bestehen.

14. Gaslaser nach einem der Ansprüche 1 bis 12, dadurch
gekennzeichnet, daß mindestens der erste Vorflügel (7;
7'; 11) auf Kathodenpotential liegend eine Hilfskathode
bildet.

15. Gaslaser nach einem der Ansprüche 1 bis 14, dadurch
gekennzeichnet, daß die (Haupt-)Kathode (3') und/oder
die auf Kathodenpotential liegenden Hilfskathoden (11)
als Hohlkörper ausgebildet sind, durch die ein Kühlmedium
strömt.

16. Gaslaser nach Anspruch 12, dadurch gekennzeichnet, daß
der erste Vorflügel (7') ein zur tropfenförmigen Kathode
(3') hin gerinfügig konkav gewölbtes Profil aufweist.

0172982

1|3

Fig.1

Fig. 2

Fig. 3

Fig.4